# EUROPEAN PATENT SPECIFICATION

(11) **EP 4 304 293 B1**
(45) Date of publication and mention of the grant of the patent: **24.12.2025**
(21) Application number: 22763649.5
(22) Date of filing: 07.03.2022
(51) Int. Cl.: H04W 76/28, H04W 76/14, H04W 72/02, H04W 72/04, H04W 72/12, H04W 4/40, H04W 92/18

(54) **METHOD AND DEVICE FOR RECONFIGURING SL DRX CONFIGURATION IN NR V2X**
VERFAHREN UND VORRICHTUNG ZUR REKONFIGURATION EINER SLDRX-KONFIGURATION IN NR V2X
PROCÉDÉ ET DISPOSITIF POUR RECONFIGURER UNE CONFIGURATION DRX SL DANS UNE TECHNOLOGIE V2X NR

(30) Priority: 05.03.2021 KR 20210029548; 24.03.2021 KR 20210038171
(43) Date of publication of application: 10.01.2024
(73) Proprietor: LG Electronics Inc., Yeongdeungpo-gu Seoul 07336 (KR)
(72) Inventor: HONG, Jongwoo, Seoul 06772 (KR); BACK, Seoyoung, Seoul 06772 (KR); PARK, Giwon, Seoul 06772 (KR); SEO, Hanbyul, Seoul 06772 (KR); LEE, Seungmin, Seoul 06772 (KR)
(74) Representative: Maikowski & Ninnemann Patentanwälte Partnerschaft mbB
(86) International application number: PCT/KR2022/003157
(87) International publication number: WO 2022/186668

(56) References cited:
- US-A1- 2020 029 245
- US-A1- 2021 051 587
- LENOVO ET AL: "Discussion on sidelink resource allocation enhancements", vol. RAN WG2, no. electronic; 20210125 - 20210205, 15 January 2021 (2021-01-15), XP051974113, Retrieved from the Internet <URL:https://ftp.3gpp.org/tsg_ran/WG2_RL2/TSGR2_113-e/Docs/R2-2101116.zip R2-2101116-Discussion on sidelink resource allocation enhancements.doc> [retrieved on 20210115]
- LENOVO ET AL: "Sidelink resource allocation for Power saving", vol. RAN WG1, no. e-Meeting; 20210125 - 20210205, 18 January 2021 (2021-01-18), XP051970512, Retrieved from the Internet <URL:https://ftp.3gpp.org/tsg_ran/WG1_RL1/TSGR1_104-e/Docs/R1-2100766.zip R1-2100766.docx> [retrieved on 20210118]
- LG ELECTRONICS: "Discussion on resource allocation for power saving", 3GPP DRAFT; R1-2100517, vol. RAN WG1, 19 January 2021 (2021-01-19), pages 1 - 20, XP051971026
- ANONYMOUS: "3rd Generation Partnership Project; Technical Specification Group Services and System Aspects; Study on architecture enhancements for 3GPP support of advanced Vehicle-to-Everything (V2X) services; Phase 2 (Release 17)", 3GPP STANDARD; TECHNICAL REPORT; 3GPP TR 23.776, no. V1.0.0, 30 November 2020 (2020-11-30), pages 1 - 29, XP051961755
- HUAWEI, HISILICON: "Consideration on the sidelink DRX for unicast", 3GPP DRAFT; R2-2101762, vol. RAN WG2, 15 January 2021 (2021-01-15), pages 1 - 6, XP051974627

## Description

### TECHNICAL FIELD

This disclosure relates to a wireless communication method and apparatus.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

In 3GPP document R2-2101116 titled "Discussion on sidelink resource allocation enhancements", views on the sidelink resource allocation enhancements in sidelink resource allocation mode 2 are provided.

In 3GPP document R1-2100766 titled "Sidelink resource allocation for Power saving", views on the sidelink resource allocation procedure for power saving for vulnerable road user and commercial D2D are discussed.

### DISCLOSURE

### TECHNICAL PROBLEM

Meanwhile, a peer UE may need to reconfigure a SL discontinuous reception (DRX) configuration for a UE. For example, if the reconfiguration of the SL DRX configuration for the UE is required, the peer UE that has an RRC connection with the base station may transmit information for requesting the reconfiguration of the SL DRX configuration to the base station, and the base station may reconfigure the SL DRX configuration and transmit the reconfigured SL DRX configuration to the peer UE, and the peer UE may transmit the reconfigured SL DRX configuration to the UE. For example, if the reconfiguration of the SL DRX configuration for the UE is required, the peer UE that does not have an RRC connection with the base station may reconfigure the SL DRX configuration by itself, and the peer UE may transmit the reconfigured SL DRX configuration to the UE. In the above-described procedure, a condition for the peer UE to trigger/perform the reconfiguration of the SL DRX configuration for the UE need to be specifically defined. Specifically, for example, if the peer UE frequently triggers/performs the reconfiguration of the SL DRX configuration for the UE, the signaling overhead between the peer UE and the UE and/or the signaling overhead between the peer UE and the base station may increase, which may cause waste of radio resources and may interfere with the communication of other UEs. On the other hand, for example, if the peer UE does not trigger/perform the reconfiguration of the SL DRX configuration for the UE, the reliability of SL communication between the peer UE and the UE may not be guaranteed due to the fact that a transmission resource of the peer UE is located outside an active time of the SL DRX configuration.

### TECHNICAL SOLUTION

The invention is defined by the independent claims. Features of certain embodiments are defined in the dependent claims.

### ADVANTAGEOUS EFFECTS

The power saving gain of the UE can be maximized and the reliability of SL communication can be secured.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows a resource unit for CBR measurement based on an embodiment of the present disclosure.
FIG. 9 shows definitions of a UE and a peer UE, based on an embodiment of the present disclosure.
FIG. 10 shows a procedure for adaptively reconfiguring a SL DRX configuration, based on an embodiment of the present disclosure.
FIG. 11 shows a procedure for reconfiguring a SL DRX configuration when resource reselection occurs due to a change in traffic patterns, based on an embodiment of the present disclosure.
FIG. 12 shows a method for a first device to perform wireless communication, based on an embodiment of the present disclosure.
FIG. 13 shows a method for a second device to perform wireless communication, based on an embodiment of the present disclosure.
FIG. 14 shows a communication system 1, based on an embodiment of the present disclosure.
FIG. 15 shows wireless devices, based on an embodiment of the present disclosure.
FIG. 16 shows a signal process circuit for a transmission signal, based on an embodiment of the present disclosure.
FIG. 17 shows another example of a wireless device, based on an embodiment of the present disclosure.
FIG. 18 shows a hand-held device, based on an embodiment of the present disclosure.
FIG. 19 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of" may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on 5G NR. However, technical features according to an embodiment of the present disclosure will not be limited only to this.

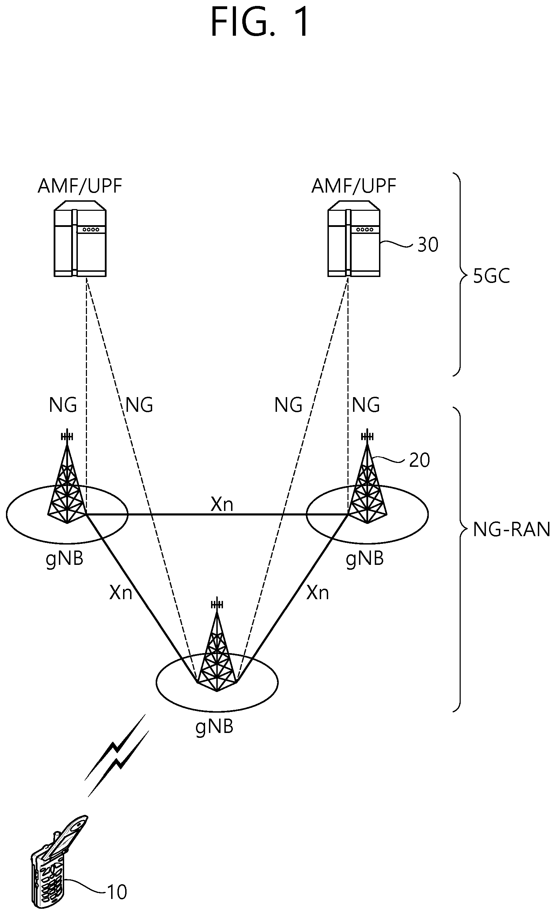

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

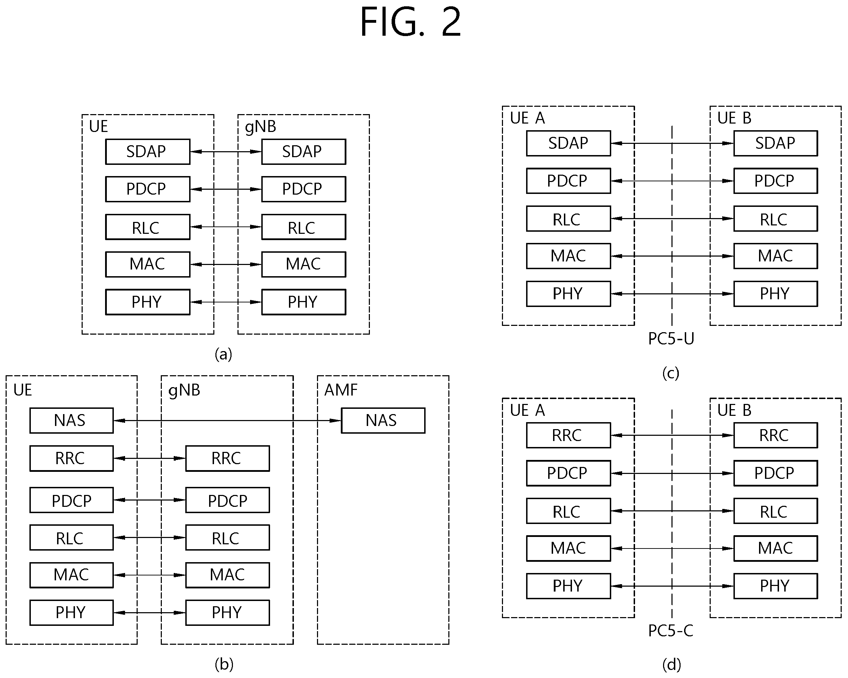

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication. (c) of FIG. 2 shows a radio protocol stack of a user plane for SL communication, and (d) of FIG. 2 shows a radio protocol stack of a control plane for SL communication.

Referring to FIG. 2, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

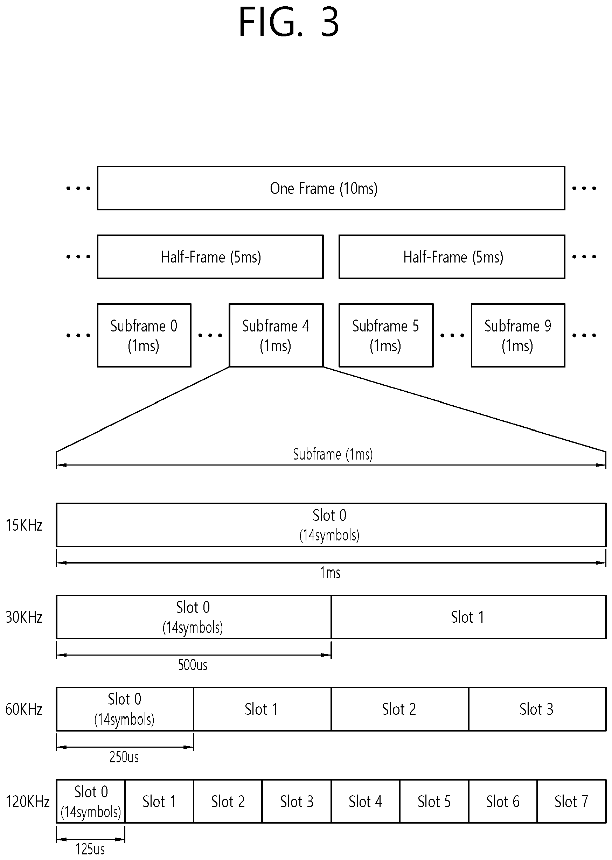

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

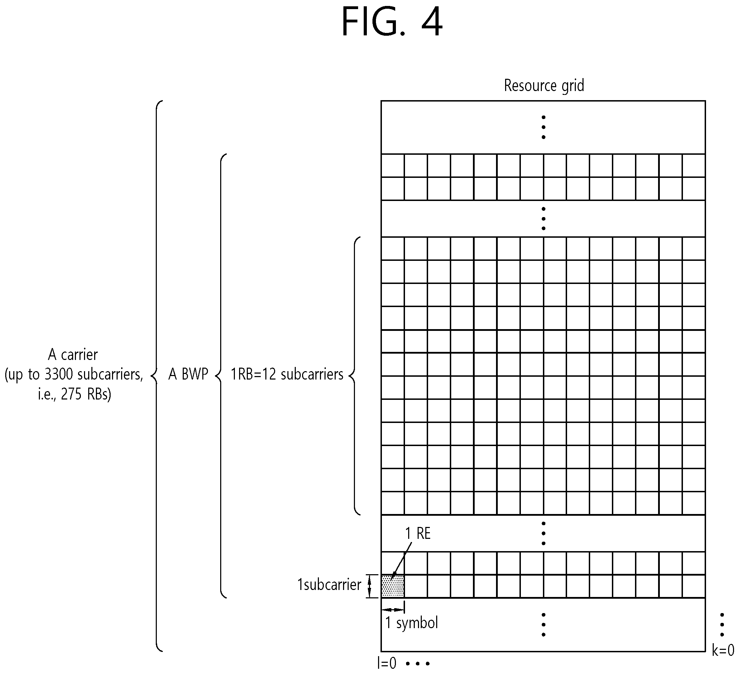

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier
For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information
- reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

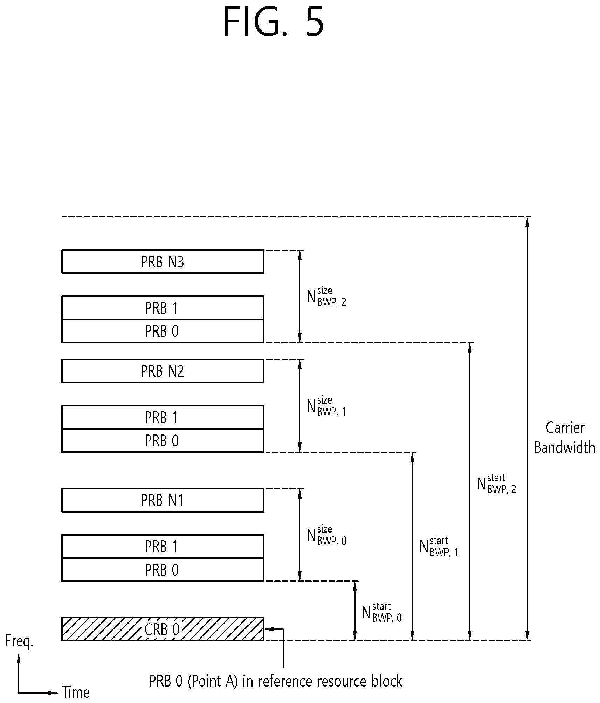

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

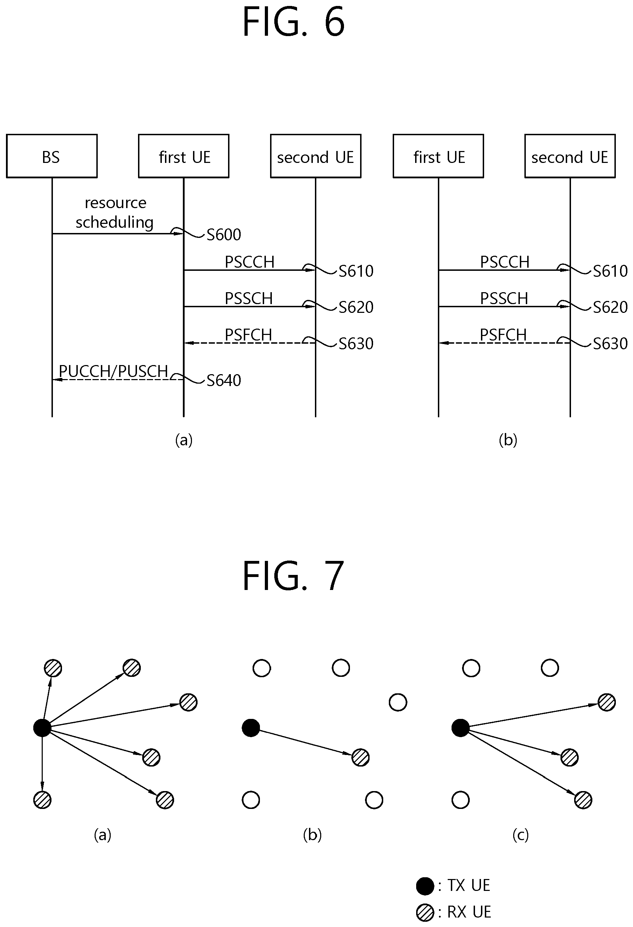

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1^{st}-stage SCI) to a second UE based on the resource scheduling. In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1^{st}-stage SCI) to a second UE by using the resource(s). In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

Referring to (a) of FIG. 6, in step S640, the first UE may transmit SL HARQ feedback to the base station through the PUCCH and/or the PUSCH.

FIG. 7 shows three cast types, based on an embodiment of the present disclosure. The embodiment of FIG. 7 may be combined with various embodiments of the present disclosure. Specifically, (a) of FIG. 7 shows broadcast-type SL communication, (b) of FIG. 7 shows unicast type-SL communication, and (c) of FIG. 7 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.
(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, UE procedure for reporting HARQ-ACK on sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH}_{PSSCH} = 0, where t'ₖ^{SL}is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots associated with a PSFCH slot that is less than or equal to N^{PSFCH}_{PSSCH}, the UE allocates the [(i+j·N^{PSFCH}_{PSSCH})·M^{PSFCH}_{subch,slot}, (i+1+j·N^{PSFCH}_{PSSCH})·M^{PSFCH}_{subch,slot}-1] PRBs from the M_{PRB,set}^{PSFCH} PRBs to slot i among the PSSCH slots associated with the PSFCH slot and sub-channel j, where M^{PSFCH}_{subch,slot} = M^{PSFCH}_{PRB,set}/(N_{subch}·N^{PSFCH}_{PSSCH}), 0 ≤ i < N^{PSFCH}_{PSSCH}, 0 ≤ j < N_{subch}, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{ESFCH}_{type}·M^{PSFCH}_{subch,slot}·N^{PSFCH}_{CS} where N^{PSFCH}_{CS} is a number of cyclic shift pairs for the resource pool and, based on an indication by higher layers,
- N^{PSFCH}_{type} = 1 and the M^{PSFCH}_{subch,slot} PRBs are associated with the starting sub-channel of the corresponding PSSCH
- N^{PSFCH}_{type} = N^{PSSCH}_{subch} and the N^{PSSCH}_{subch}·M^{PSFCH}_{subch,slot} PRBs are associated with one or more sub-channels from the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift α, from a cyclic shift pair index corresponding to a PSFCH resource index and from N^{PSFCH}_{CS} using Table 8.

**[Table 8]**

| N^{PSFCH}_{CS} | m₀ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a mₑₛ value, for computing a value of cyclic shift α, as in Table 9 if the UE detects a SCI format 2-A with Cast type indicator field value of "01" or "10", or as in Table 10 if the UE detects a SCI format 2-B or a SCI format 2-A with Cast type indicator field value of "11". The UE applies one cyclic shift from a cyclic shift pair to a sequence used for the PSFCH transmission.

**[Table 9]**

| | | |
|---|---|---|
| HARQ-ACK Value | 0 (NACK) | 1 (ACK) |
| Sequence cyclic shift | 0 | 6 |

**[Table 10]**

| | | |
|---|---|---|
| HARQ-ACK Value | 0 (NACK) | 1 (ACK) |
| Sequence cyclic shift | 0 | N/A |

Hereinafter, sidelink (SL) congestion control will be described.

For example, the UE may determine whether energy measured in a unit time/frequency resource is greater than or equal to a specific level, and may adjust an amount and frequency of use for its transmission resource based on a ratio of the unit time/frequency resource in which the energy greater than or equal to the specific level is observed. In the present disclosure, the ratio of the time/frequency resource in which the energy greater than or equal to the specific level is observed may be defined as a channel busy ratio (CBR). The UE may measure the CBR for a channel/frequency. Additionally, the UE may transmit the measured CBR to the network/BS.

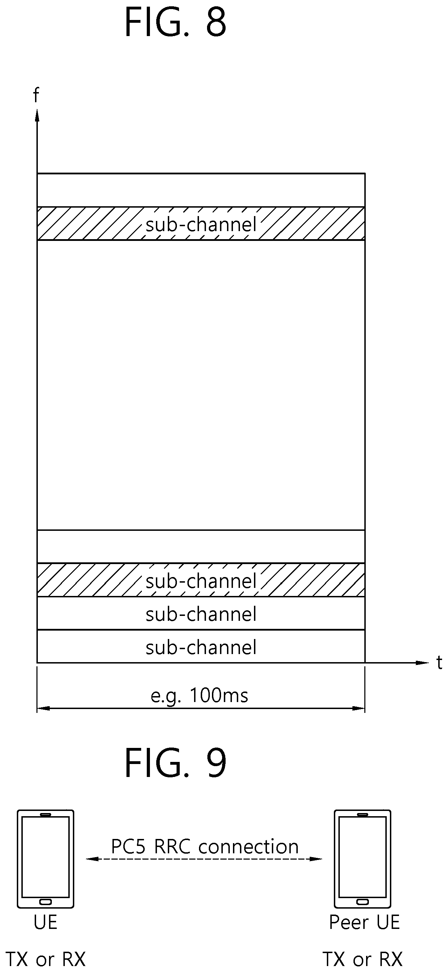

FIG. 8 shows a resource unit for CBR measurement based on an embodiment of the present disclosure. The embodiment of FIG. 8 may be combined with various embodiments of the present disclosure.

Referring to FIG. 8, CBR may denote the number of sub-channels in which a measurement result value of a received signal strength indicator (RSSI) has a value greater than or equal to a pre-configured threshold as a result of measuring the RSSI by a UE on a sub-channel basis for a specific period (e.g., 100 ms). Alternatively, the CBR may denote a ratio of sub-channels having a value greater than or equal to a pre-configured threshold among sub-channels for a specific duration. For example, in the embodiment of FIG. 8, if it is assumed that a hatched sub-channel is a sub-channel having a value greater than or equal to a pre-configured threshold, the CBR may denote a ratio of the hatched sub-channels for a period of 100 ms. Additionally, the CBR may be reported to the BS.

For example, if a PSCCH and a PSSCH are multiplexed, the UE may perform one CBR measurement for one resource pool. Herein, if a PSFCH resource is configured or pre-configured, the PSFCH resource may be excluded in the CBR measurement.

Further, congestion control considering a priority of traffic (e.g., packet) may be necessary. To this end, for example, the UE may measure a channel occupancy ratio (CR). Specifically, the UE may measure the CBR, and the UE may determine a maximum value CRlimitk of a channel occupancy ratio k (CRk) that can be occupied by traffic corresponding to each priority (e.g., k) based on the CBR. For example, the UE may derive the maximum value CRlimitk of the channel occupancy ratio with respect to a priority of each traffic, based on a predetermined table of CBR measurement values. For example, in case of traffic having a relatively high priority, the UE may derive a maximum value of a relatively great channel occupancy ratio. Thereafter, the UE may perform congestion control by restricting a total sum of channel occupancy ratios of traffic, of which a priority k is lower than i, to a value less than or equal to a specific value. Based on this method, the channel occupancy ratio may be more strictly restricted for traffic having a relatively low priority.

In addition thereto, the UE may perform SL congestion control by using a method of adjusting a level of transmit power, dropping a packet, determining whether retransmission is to be performed, adjusting a transmission RB size (MCS coordination), or the like.

Table 11 shows an example of SL CBR and SL RSSI.

**[Table 11]**

| **SL CBR** | | |
|---|---|---|
| **Definition** | | SL Channel Busy Ratio (SL CBR) measured in slot *n* is defined as the portion of sub-channels in the resource pool whose SL RSSI measured by the UE exceed a (pre-)configured threshold sensed over a CBR measurement window [*n-a, n*-1]*,* wherein a is equal to 100 or 100·2^{µ} slots, according to higher layer parameter *timeWindowSize-CBR.* |
| **Applicable for** | | RRC_IDLE intra-frequency, |
| | | RRC_IDLE inter-frequency, |
| | | RRC_CONNECTED intra-frequency, |
| | | RRC_CONNECTED inter-frequency |

| **SL RSSI** | | |
|---|---|---|
| **Definition** | | Sidelink Received Signal Strength Indicator (SL RSSI) is defined as the linear average of the total received power (in [W]) observed in the configured sub-channel in OFDM symbols of a slot configured for PSCCH and PSSCH, starting from the 2^{nd} OFDM symbol. |
| | | For frequency range 1, the reference point for the SL RSSI shall be the antenna connector of the UE. For frequency range 2, SL RSSI shall be measured based on the combined signal from antenna elements corresponding to a given receiver branch. For frequency range 1 and 2, if receiver diversity is in use by the UE, the reported SL RSSI value shall not be lower than the corresponding SL RSSI of any of the individual receiver branches. |
| **Applicable for** | | RRC_IDLE intra-frequency, |
| | | RRC_IDLE inter-frequency, |
| | | RRC_CONNECTED intra-frequency, |
| | | RRC_CONNECTED inter-frequency |

Referring to Table 11, the slot index may be based on a physical slot index.

Table 12 shows an example of SL Channel Occupancy Ratio (CR).

**[Table 12]**

| | | |
|---|---|---|
| **Definition** | | Sidelink Channel Occupancy Ratio (SL CR) evaluated at slot *n* is defined as the total number of sub-channels used for its transmissions in slots [*n-a, n-1*] and granted in slots [*n, n+b*] divided by the total number of configured sub-channels in the transmission pool over [*n-a, n+b*]. |
| **Applicable for** | | RRC_IDLE intra-frequency, |
| | | RRC_IDLE inter-frequency, |
| | | RRC_CONNECTED intra-frequency, |
| | | RRC_CONNECTED inter-frequency |
| NOTE 1: | *a* is a positive integer and b is 0 or a positive integer; *a* and b are determined by UE implementation with *a+b+1* = 1000 or 1000·2^{µ} slots, according to higher layer parameter *timeWindowSize-CR,* b < (a+b+1)/2, and n+b shall not exceed the last transmission opportunity of the grant for the current transmission. | |
| NOTE 2: | SL CR is evaluated for each (re)transmission. | |
| NOTE 3: | In evaluating SL CR, the UE shall assume the transmission parameter used at slot *n* is reused according to the existing grant(s) in slot [*n+1, n+b*] without packet dropping. | |
| NOTE 4: | The slot index is based on physical slot index. | |
| NOTE 5: | SL CR can be computed per priority level | |
| NOTE 6: | A resource is considered granted if it is a member of a selected sidelink grant as defined in TS 38.321 [7]. | |

Referring to the standard document, some procedures and technical specifications related to this disclosure are as follows. The UE may perform DRX operation based on Table 13 to Table 15. The operation/procedure described in Table 13 to Table 15 may be combined with various embodiments of the present disclosure.

**[Table 13]**

| | |
|---|---|
| 5.7 | Discontinuous Reception (DRX) |
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously using the DRX operation specified in this clause; otherwise the MAC entity shall monitor the PDCCH as specified in TS 38.213 [6]. | |
| | NOTE 1: If Sidelink resource allocation mode 1 is configured by RRC, a DRX functionality is not configured. |
| RRC controls DRX operation by configuring the following parameters: | |
| | *- drx-onDurationTimer:* the duration at the beginning of a DRX cycle; |
| | *- drx-SlotOffset:* the delay before starting the *drx-onDurationTimer;* |
| | *- drx-InactivityTimer:* the duration after the PDCCH occasion in which a PDCCH indicates a new UL or DL transmission for the MAC entity; |
| | *- drx-RetransmissionTimerDL* (per DL HARQ process except for the broadcast process): the maximum duration until a DL retransmission is received; |
| | *- drx-RetransmissionTimerUL* (per UL HARQ process): the maximum duration until a grant for UL retransmission is received; |
| | *- drx-LongCycleStartOffset:* the Long DRX cycle and *drx-StartOffset* which defines the subframe where the Long and Short DRX cycle starts; |
| | *- drx-ShortCycle* (optional): the Short DRX cycle; |
| | *- drx-ShortCycleTimer* (optional): the duration the UE shall follow the Short DRX cycle; |
| | *- drx-HARQ-RTT-TimerDL* (per DL HARQ process except for the broadcast process): the minimum duration before a DL assignment for HARQ retransmission is expected by the MAC entity; |
| | *- drx-HARQ-RTT-TimerUL* (per UL HARQ process): the minimum duration before a UL HARQ retransmission grant is expected by the MAC entity; |
| | *- ps-Wakeup* (optional): the configuration to start associated *drx-onDurationTimer* in case DCP is monitored but not detected; |
| | *- ps-TransmitOtherPeriodicCSI* (optional): the configuration to report periodic CSI that is not L1-RSRP on PUCCH during the time duration indicated by *drx-onDurationTimer* in case DCP is configured but associated *drx-onDurationTimer* is not started; |
| | *- ps-TransmitPeriodicL1-RSRP* (optional): the configuration to transmit periodic CSI that is L1-RSRP on PUCCH during the time duration indicated by *drx-onDurationTimer* in case DCP is configured but associated *drx-onDurationTimer* is not started. |
| Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for each DRX group are: *drx-onDurationTimer, drx-InactivityTimer.* The DRX parameters that are common to the DRX groups are: *drx-SlotOffset, drx-RetransmissionTimerDL, drx-RetransmissionTimerUL, drx-LongCycleStartOffset, drx-ShortCycle* (optional), *drx-ShortCycleTimer* (optional), *drx-HARQ-RTT-TimerDL,* and *drx-HARQ-RTT-TimerUL.* | |
| When a DRX cycle is configured, the Active Time for Serving Cells in a DRX group includes the time while: | |
| | *- drx-onDurationTimer* or *drx-InactivityTimer* configured for the DRX group is running; or |
| | *- drx-RetransmissionTimerDL* or *drx-RetransmissionTimerUL* is running on any Serving Cell in the DRX group; or |
| | *- ra-ContentionResolutionTimer* (as described in clause 5.1.5) or *msgB-ResponseWindow* (as described in clause 5.1.4a) is running; or |
| | - a Scheduling Request is sent on PUCCH and is pending (as described in clause 5.4.4); or |
| | - a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a). |

**[Table 14]**

| | | | |
|---|---|---|---|
| When DRX is configured, the MAC entity shall: | | | |
| | 1> if a MAC PDU is received in a configured downlink assignment: | | |
| | | 2> start the *drx-HARQ-RTT-TimerDL* for the corresponding HARQ process in the first symbol after the end of the corresponding transmission carrying the DL HARQ feedback; | |
| | | 2> stop the *drx-RetransmissionTimerDL* for the corresponding HARQ process. | |
| | 1> if a MAC PDU is transmitted in a configured uplink grant and LBT failure indication is not received from lower layers: | | |
| | | 2> start the *drx-HARQ-RTT-TimerUL* for the corresponding HARQ process in the first symbol after the end of the first transmission (within a bundle) of the corresponding PUSCH transmission; | |
| | | 2> stop the *drx-RetransmissionTimerUL* for the corresponding HARQ process at the first transmission (within a bundle) of the corresponding PUSCH transmission. | |
| | 1> if a *drx-HARQ-RTT-TimerDL* expires: | | |
| | | 2> if the data of the corresponding HARQ process was not successfully decoded: | |
| | | | 3> start the *drx-RetransmissionTimerDL* for the corresponding HARQ process in the first symbol after the expiry of *drx-HARQ-RTT-TimerDL.* |
| | 1> if a *drx-HARQ-RTT-TimerUL* expires: | | |
| | | 2> start the *drx-RetransmissionTimerUL* for the corresponding HARQ process in the first symbol after the expiry of *drx-HARQ-RTT-TimerUL.* | |
| | 1> if a DRX Command MAC CE or a Long DRX Command MAC CE is received: | | |
| | | 2> stop *drx-onDurationTimer* for each DRX group; | |
| | | 2> stop *drx-InactivityTimer* for each DRX group. | |
| | 1> if *drx-InactivityTimer* for a DRX group expires: 2> if the Short DRX cycle is configured: | | |
| | | | 3> start or restart *drx-ShortCycleTimer* for this DRX group in the first symbol after the expiry of *drx-InactivityTimer;* |
| | | | 3> use the Short DRX cycle for this DRX group. |
| | | 2> else: | |
| | | | 3> use the Long DRX cycle for this DRX group. |
| | 1> if a DRX Command MAC CE is received: | | |
| | | 2> if the Short DRX cycle is configured: | |
| | | | 3> start or restart *drx-ShortCycleTimer* for each DRX group in the first symbol after the end of DRX Command MAC CE reception; |
| | | | 3> use the Short DRX cycle for each DRX group. |
| | | 2> else: | |
| | | | 3> use the Long DRX cycle for each DRX group. |
| | 1> if *drx-ShortCycleTimer* for a DRX group expires: | | |
| | | 2> use the Long DRX cycle for this DRX group. | |
| | 1> if a Long DRX Command MAC CE is received: | | |
| | | 2> stop *drx-ShortCycleTimer* for each DRX group; | |
| | | 2> use the Long DRX cycle for each DRX group. | |
| | 1> if the Short DRX cycle is used for a DRX group, and [(SFN × 10) + subframe number] modulo *(drx-ShortCycle)* = *(drx-StartOffset)* modulo *(drx-ShortCycle):* | | |
| | | 2> start *drx-onDurationTimer* for this DRX group after *drx-SlotOffset* from the beginning of the subframe. | |
| | 1> if the Long DRX cycle is used for a DRX group, and [(SFN × 10) + subframe number] modulo *(drx-LongCycle) = drx-StartOffset:* | | |
| | | 2> if DCP monitoring is configured for the active DL BWP as specified in TS 38.213 [6], clause 10.3: | |
| | | | 3> if DCP indication associated with the current DRX cycle received from lower layer indicated to start *drx-onDurationTimer,* as specified in TS 38.213 [6]; or |
| | | | 3> if all DCP occasion(s) in time domain, as specified in TS 38.213 [6], associated with the current DRX cycle occurred in Active Time considering grants/assignments/DRX Command MAC CE/Long DRX Command MAC CE received and Scheduling Request sent until 4 ms prior to start of the last DCP occasion, or during a measurement gap, or when the MAC entity monitors for a PDCCH transmission on the search space indicated by *recoverySearchSpaceld* of the SpCell identified by the C-RNTI while the *ra-Response Window* is running (as specified in clause 5.1.4); or |
| | | 3> if *ps-Wakeup* is configured with value *true* and DCP indication associated with the current DRX cycle has not been received from lower layers: | |
| | | | 4> start *drx-onDurationTimer* after *drx-SlotOffset* from the beginning of the subframe. |
| | 2> else: | | |
| | | 3> start *drx-onDurationTimer* for this DRX group after *drx-SlotOffset* from the beginning of the subframe. | |
| NOTE 2: In case of unaligned SFN across carriers in a cell group, the SFN of the SpCell is used to calculate the DRX duration. | | | |

**[Table 15]**

| | | | |
|---|---|---|---|
| 1> if a DRX group is in Active Time: | | | |
| | 2> monitor the PDCCH on the Serving Cells in this DRX group as specified in TS 38.213 [6]; | | |
| | 2> if the PDCCH indicates a DL transmission: | | |
| | | 3> start the *drx-HARQ-RTT-TimerDL* for the corresponding HARQ process in the first symbol after the end of the corresponding transmission carrying the DL HARQ feedback; | |
| NOTE 3: When HARQ feedback is postponed by PDSCH-to-HARQ_feedback timing indicating a non-numerical k1 value, as specified in TS 38.213 [6], the corresponding transmission opportunity to send the DL HARQ feedback is indicated in a later PDCCH requesting the HARQ-ACK feedback. | | | |
| | | 3> stop the *drx-RetransmissionTimerDL* for the corresponding HARQ process. | |
| | | 3> if the PDSCH-to-HARQ_feedback timing indicate a non-numerical k1 value as specified in TS 38.213 [6]: | |
| | | | 4> start the *drx-RetransmissionTimerDL* in the first symbol after the PDSCH transmission for the corresponding HARQ process. |
| | 2> if the PDCCH indicates a UL transmission: | | |
| | | 3> start the *drx-HARQ-RTT-TimerUL* for the corresponding HARQ process in the first symbol after the end of the first transmission (within a bundle) of the corresponding PUSCH transmission; | |
| | | 3> stop the *drx-RetransmissionTimerUL* for the corresponding HARQ process. | |
| | 2> if the PDCCH indicates a new transmission (DL or UL) on a Serving Cell in this DRX group: | | |
| | | 3> start or restart *drx-InactivityTimer* for this DRX group in the first symbol after the end of the PDCCH reception. | |
| | 2> if a HARQ process receives downlink feedback information and acknowledgement is indicated: | | |
| | | 3> stop the *drx-RetransmissionTimerUL* for the corresponding HARQ process. | |
| 1> if DCP monitoring is configured for the active DL BWP as specified in TS 38.213 [6], clause 10.3; and | | | |
| 1> if the current symbol n occurs within *drx-onDurationTimer* duration; and | | | |
| 1> if *drx-onDurationTimer* associated with the current DRX cycle is not started as specified in this clause: | | | |
| | 2> if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause: | | |
| | | 3> not transmit periodic SRS and semi-persistent SRS defined in TS 38.214 [7]; | |
| | | 3> not report semi-persistent CSI configured on PUSCH; | |
| | | 3> if *ps-TransmitPeriodicL1* -RSRP is not configured with value *true:* | |
| | | | 4> not report periodic CSI that is L1-RSRP on PUCCH. |
| | | 3> if *ps-TransmitOtherPeriodicCSI* is not configured with value *true:* | |
| | | | 4> not report periodic CSI that is not L1-RSRP on PUCCH. |
| 1> else: | | | |
| | 2> in current symbol n, if a DRX group would not be in Active Time considering grants/assignments scheduled on Serving Cell(s) in this DRX group and DRX Command MAC CE/Long DRX Command MAC CE received and Scheduling Request sent until 4 ms prior to symbol n when evaluating all DRX Active Time conditions as specified in this clause: | | |
| | | 3> not transmit periodic SRS and semi-persistent SRS defined in TS 38.214 [7] in this DRX group; | |
| | | 3> not report CSI on PUCCH and semi-persistent CSI configured on PUSCH in this DRX group. | |
| | 2> if CSI masking *(csi-Mask)* is setup by upper layers: | | |
| | | 3> in current symbol n, if *drx-onDurationTimer* of a DRX group would not be running considering grants/assignments scheduled on Serving Cell(s) in this DRX group and DRX Command MAC CE/Long DRX Command MAC CE received until 4 ms prior to symbol n when evaluating all DRX Active Time conditions as specified in this clause; and | |
| | | | 4> not report CSI on PUCCH in this DRX group. |
| NOTE 4: If a UE multiplexes a CSI configured on PUCCH with other overlapping UCI(s) according to the procedure specified in TS 38.213 [6] clause 9.2.5 and this CSI multiplexed with other UCI(s) would be reported on a PUCCH resource outside DRX Active Time of the DRX group in which this PUCCH is configured, it is up to UE implementation whether to report this CSI multiplexed with other UCI(s). | | | |
| Regardless of whether the MAC entity is monitoring PDCCH or not on the Serving Cells in a DRX group, the MAC entity transmits HARQ feedback, aperiodic CSI on PUSCH, and aperiodic SRS defined in TS 38.214 [7] on the Serving Cells in the DRX group when such is expected. | | | |
| The MAC entity needs not to monitor the PDCCH if it is not a complete PDCCH occasion (e.g. the Active Time starts or ends in the middle of a PDCCH occasion). | | | |

Meanwhile, the discontinuous reception (DRX) operation will be introduced in Rel-17 NR V2X. If a SL DRX configuration is introduced, there is an issue on how to align SL DRX and Uu DRX for a CONNECTED UE operating in the mode 1/mode 2, which is included in work items. Table 16 shows the work items.

**[Table 16]**

| | | | |
|---|---|---|---|
| The objective of this work item is to specify radio solutions that can enhance NR sidelink for the V2X, public safety and commercial use cases. | | | |
| 1. Sidelink evaluation methodology update: Define evaluation assumption and performance metric for power saving by reusing TR 36.843 and/or TR 38.840 (to be completed by RAN#89) [RAN1] | | | |
| | | | • Note: TR 37.885 is reused for the other evaluation assumption and performance metric. Vehicle dropping model B and antenna option 2 shall be a more realistic baseline for highway and urban grid scenarios. |
| 2. Resource allocation enhancement: | | | |
| | | • Specify resource allocation to reduce power consumption of the UEs [RAN1, RAN2] | |
| | | • Baseline is to introduce the principle of Rel-14 LTE sidelink random resource selection and partial sensing to Rel-16 NR sidelink resource allocation mode 2. | |
| | | • Note: Taking Rel-14 as the baseline does not preclude introducing a new solution to reduce power consumption for the cases where the baseline cannot work properly. | |
| | | • Study the feasibility and benefit of the enhancement(s) in mode 2 for enhanced reliability and reduced latency in consideration of both PRR and PIR defined in TR37.885 (by RAN#91), and specify the identified solution if deemed feasible and beneficial [RAN1, RAN2] | |
| | | • Inter-UE coordination with the following until RAN#90. | |
| | | • A set of resources is determined at UE-A. This set is sent to UE-B in mode 2, and UE-B takes this into account in the resource selection for its own transmission. | |
| | | • Note: The study scope after RAN#90 is to be decided in RAN#90. | |
| | | • Note: The solution should be able to operate in-coverage, partial coverage, and out-of-coverage and to address consecutive packet loss in all coverage scenarios. | |
| | | • Note: RAN2 work will start after [RAN#89]. | |
| 3. Sidelink DRX for broadcast, groupcast, and unicast [RAN2] | | | |
| | • Define on- and off-durations in sidelink and specify the corresponding UE procedure | | |
| | • Specify mechanism aiming to align sidelink DRX wake-up time among the UEs communicating with each other | | |
| | • Specify mechanism aiming to align sidelink DRX wake-up time with Uu DRX wake-up time in an in-coverage UE | | |
| 4. Support of new sidelink frequency bands for single-carrier operations [RAN4] | | | |
| | • Support of new sidelink frequency bands should ensure coexistence between sidelink and Uu interface in the same and adjacent channels in licensed spectrum. | | |
| | • The exact frequency bands are to be determined based on company input during the WI, considering both licensed and ITS-dedicated spectrum in both FR1 and FR2. | | |
| 5. Define mechanism to ensure sidelink operation can be confined to a predetermined geographic area(s) for a given frequency range within non-ITS bands [RAN2]. | | | |
| | • This applies areas where there is no network coverage. | | |
| 6. UE Tx and Rx RF requirement for the new features introduced in this WI [RAN4] | | | |
| 7. UE RRM core requirement for the new features introduced in this WI [RAN4] | | | |

In the present disclosure, aligning Uu link DRX and SL DRX means that on-durations are adjacent from a timing perspective so that the UE wakes up once to receive a PDCCH/PSCCH or a PSCCH/PDCCH. Herein, the adjacency may mean that on-durations of the Uu link DRX and the SL DRX are located on the time domain within a predetermined time (t>=0).

FIG. 9 shows definitions of a UE and a peer UE, based on an embodiment of the present disclosure. The embodiment of FIG. 9 may be combined with various embodiments of the present disclosure.

In the present disclosure, it is assumed that the UE performs SL reception and DRX operation, and the peer UE performs SL transmission operation. Both the UE and the peer UE are assumed to be in an RRC _IDLE/INACTIVE state or an RRC_CONNECTED state. In the present disclosure, the term "RX UE" may be extended to or interpreted as a UE transmitting a DRX configuration (of the UE or of the peer UE) and/or a UE receiving a DRX configuration (of the UE or of the peer UE) transmitted by the peer UE. Furthermore, the term "RX UE" may be extended to or interpreted as a UE transmitting assistance information (e.g., traffic generation pattern/period/timing, selected resource/SL grant information, (related) priority information, etc.) (of the UE or of the peer UE) and/or a UE receiving assistance information (of the UE or of the peer UE) transmitted by the peer UE. In the present disclosure, the term "recommended SL DRX configuration" may be extended to or interpreted as a SL DRX configuration signaled by the UE to the peer UE, which is preferred by the UE (or which will be used by the UE or which is likely to be used by the UE (in the future)) (and/or, from the UE's perspective, a preferred SL DRX configuration to be used by peer UE).

Meanwhile, the peer UE may need to reconfigure a SL DRX configuration for the UE. For example, if the reconfiguration of the SL DRX configuration for the UE is required, the peer UE that has an RRC connection with the base station may transmit information for requesting the reconfiguration of the SL DRX configuration to the base station, and the base station may reconfigure the SL DRX configuration and transmit the reconfigured SL DRX configuration to the peer UE, and the peer UE may transmit the reconfigured SL DRX configuration to the UE. For example, if the reconfiguration of the SL DRX configuration for the UE is required, the peer UE that does not have an RRC connection with the base station may reconfigure the SL DRX configuration by itself, and the peer UE may transmit the reconfigured SL DRX configuration to the UE. In the above-described procedure, a condition for the peer UE to trigger/perform the reconfiguration of the SL DRX configuration for the UE need to be specifically defined. Specifically, for example, if the peer UE frequently triggers/performs the reconfiguration of the SL DRX configuration for the UE, the signaling overhead between the peer UE and the UE and/or the signaling overhead between the peer UE and the base station may increase, which may cause waste of radio resources and may interfere with the communication of other UEs. On the other hand, for example, if the peer UE does not trigger/perform the reconfiguration of the SL DRX configuration for the UE, the reliability of SL communication between the peer UE and the UE may not be guaranteed due to the fact that a transmission resource of the peer UE is located outside an active time of the SL DRX configuration. Based on various embodiments of the present disclosure, a method for the peer UE to trigger/perform the reconfiguration of the SL DRX configuration for the UE and an apparatus to support the same are proposed.

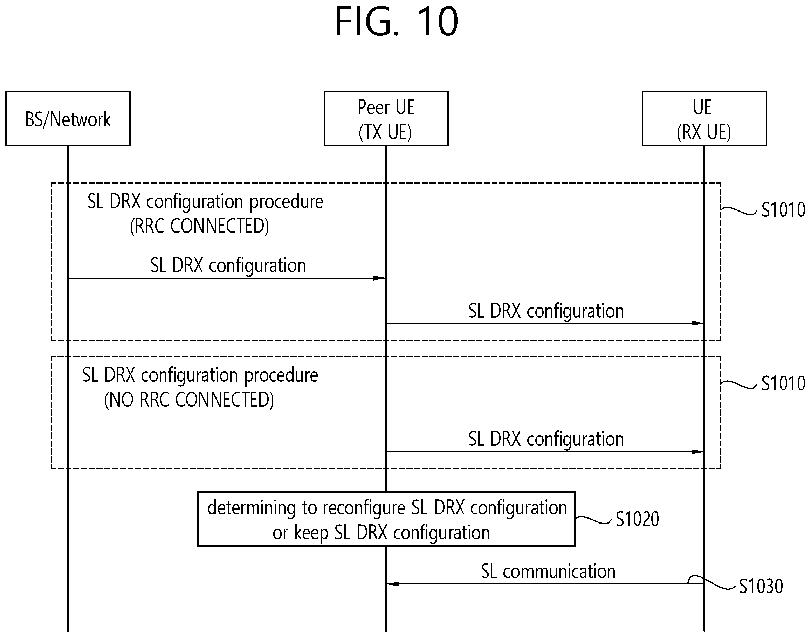

FIG. 10 shows a procedure for adaptively reconfiguring a SL DRX configuration, based on an embodiment of the present disclosure. The embodiment of FIG. 10 may be combined with various embodiments of the present disclosure.

Referring to FIG. 10, in step S1010, a SL DRX configuration may be configured for a peer UE and/or a UE. For example, the (mode 1/mode 2) RRC CONNECTED UE may receive the SL DRX configuration from a network for alignment with Uu DRX. For example, the peer UE may receive the SL DRX configuration from the network. For example, the UE may receive the SL DRX configuration from the peer UE. In the present disclosure, the peer UE may refer to a UE with PC5 RRC connection/PC5-signaling established for unicast communication. For example, the network may include a base station.

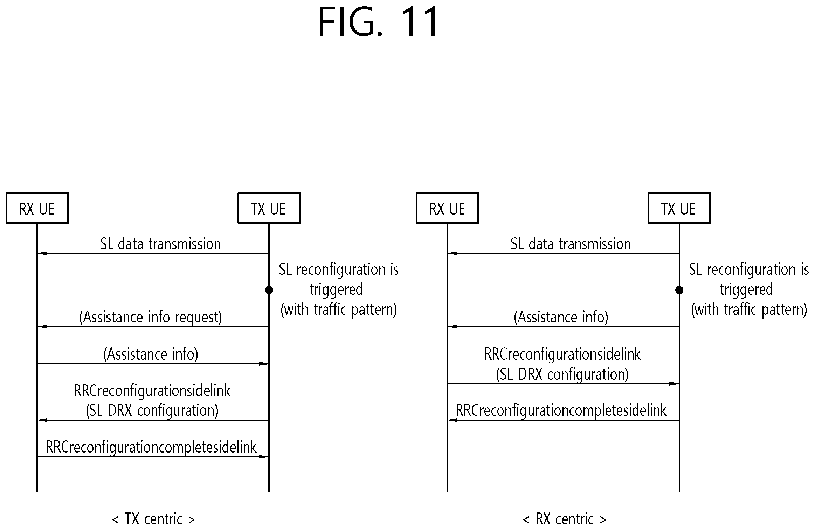

In step S1020, for an option 1, even if resource reselection is performed, the peer UE may not always perform a DRX reconfiguration procedure depending on a condition, and the peer UE may only perform the (pair-specific, per direction) DRX reconfiguration procedure for SL unicast transmission under a certain condition. FIG. 11 shows a DRX reconfiguration procedure.

FIG. 11 shows a procedure for reconfiguring a SL DRX configuration when resource reselection occurs due to a change in traffic patterns, based on an embodiment of the present disclosure. The embodiment of FIG. 11 may be combined with various embodiments of the present disclosure. For example, in step S1020, if the peer UE determines to reconfigure the SL DRX configuration, the SL DRX configuration may be reconfigured based on the procedure of FIG. 11. However, the procedure for reconfiguring the SL DRX configuration is not limited to the embodiment of FIG. 11. For example, if the TX UE has an RRC connection with the base station/network, the SL DRX configuration may be determined by the base station/network. For example, the transmission and reception of assistance information described in the embodiment of FIG. 11 may be skipped. In other words, in the procedure for reconfiguring the SL DRX configuration, the signaling shown in FIG. 11 may be skipped and/or signaling not shown in FIG. 11 may be added.

Performing the DRX reconfiguration procedure refers to changing the DRX configuration for SL unicast transmission. The condition for the peer UE to trigger the SL DRX reconfiguration is as follows.
- An example method not according to the invention as defined in the claims and presented for illustration purposes only is provided if the peer UE receives recommended SL DRX configuration information from the UE, the peer UE may be configured to trigger resource reselection if the associated wake-up time and existing reserved/selected transmission resources do not overlap (by greater than or equal to a pre-configured threshold ratio/number). In this case, for example, the SL DRX reconfiguration operation can be performed/completed quickly. Herein, for example, the peer UE may perform resource reselection only after the SL DRX reconfiguration procedure is completed. Thus, the peer UE may be configured to perform SL data transmission to the UE based on a (pre-configured) (broadcast/groupcast) common DRX configuration, from a time when the reselection of existing reserved/selected resources is triggered to a time when the resource reselection (and/or SL DRX reconfiguration) is completed. This may be in the form that the SL DRX reconfiguration operation is performed/allowed regardless of whether or not the resource reselection is triggered (and/or that the SL DRX reconfiguration operation (and/or the operation of receiving (and/or requesting) (recommended/updated) SL DRX configuration information) triggers the resource reselection).
- An example method not according to the invention as defined in the claims and presented for illustration purposes only is provided if (periodic) traffic pattern information (e.g., traffic generation pattern/period, slot/timing offset, traffic size, traffic generation) and/or existing (configured/currently used) SL DRX configuration information or SL DRX configuration information recommended by the UE to the peer UE is changed, and/or
- An example method not according to the invention as defined in the claims and presented for illustration purposes only is provided if (consecutive) DTX (e.g., a problem in which the RX UE fails to decode a PSCCH and does not transmit a PSFCH) (and/or NACK) occurs by greater than or equal to a pre-configured threshold number when performing communication based on an existing (configured/currently used) SL DRX configuration and/or wake-up time, and/or
- An example method not according to the invention as defined in the claims and presented for illustration purposes only is provided if generated data is dropped by greater than or equal to a pre-configured threshold number (e.g., if transmission is impossible within an existing wake-up time when considering the data-related (remaining) PDB) when performing communication based on an existing (configured/currently used) SL DRX configuration and/or wake-up time, and/or
- If, among transmission resources related to generated data, transmission resources greater than or equal to a pre-configured threshold number/ratio are located within an inactive time of an existing SL DRX configuration when performing communication based on an existing (configured/currently used) SL DRX configuration and/or wake-up time, and/or
- An example method not according to the invention as defined in the claims and presented for illustration purposes only is provided if interference level (e.g., CBR) measured within an active time related to an existing (configured/currently used) SL DRX configuration is greater than or equal to a pre-configured threshold, and/or
- An example method not according to the invention as defined in the claims and presented for illustration purposes only is provided if an overlap time/ratio between a wake-up time related to an existing SL DRX configuration and a wake-up time related to a recommended SL DRX configuration (received from the UE) is less than a pre-configured threshold time/ratio, and/or
- An example method not according to the invention as defined in the claims and presented for illustration purposes only is provided if a difference between a previous traffic pattern parameter (e.g., data generation period/offset) transmitted by the peer UE to the UE and the latest traffic pattern parameter transmitted (or to be transmitted) by the peer UE to the UE is greater than a pre-configured threshold (e.g., when performing a reconfiguration for a SL DRX configuration of the UE for receiving a packet transmitted by the peer UE)

Based on an embodiment of the present disclosure, the operation of notifying the network after the resource reselection occurs is as follows.

For example, if SCHEDULED RSC is not included within a wake-up time of a target RX UE (by greater than or equal to a pre-configured threshold number/ratio), an RRC_CONNECTED UE (operating based on the mode 1/2) may inform a base station of this status and request resource reallocation. In this case, the mode 1 TX UE may also report (preferred) wake-up time pattern information related to the target RX UE. For example, if the target RX UE changes its wake-up time pattern when a SL DRX configuration is determined in an "RX centric" manner, the (preferred) wake-up time pattern may include a new SL DRX configuration configured by the RX UE as well as a SL DRX configuration currently in use.

Based on an embodiment of the present disclosure, the operation of notifying the peer UE after the resource reselection occurs is as follows.

For example, if SCHEDULED RSC is not included within a wake-up time of a target RX UE (by greater than or equal to a pre-configured threshold number/ratio), an RRC_IDLE UE (operating based on the mode 2) may inform the peer UE of this status and request resource reallocation. In this case, the mode 2 TX UE may also report (preferred) wake-up time pattern information related to the target RX UE. For example, if the target RX UE changes its wake-up time pattern when a SL DRX configuration is determined in an "RX centric" manner, the (preferred) wake-up time pattern may include a new SL DRX configuration configured by the RX UE as well as a SL DRX configuration currently in use.

In step S 1020, for an option 2, when considering the SL unicast DRX operation of the UE, the following operation may be performed if data cannot be received because a time domain of resources in which the peer UE intends to use for transmission to the UE is located in an inactive time. The exchange of a SL DRX reset message may be performed based on a (pre-configured) (broadcast/groupcast) common DRX configuration.
- The UE or the peer UE may transmit SL data by considering the common DRX configuration rather than the SL unicast DRX configuration.

If SL data to be transmitted considering the common DRX configuration is within an inactive time, an RRC reconfiguration may be performed. For example, a DRX configuration for SL data transmission may be configured.

For example, the SL DRX reconfiguration operation (and/or the (recommended) SL DRX configuration information update/transmission operation) may be configured/limited to be performed/triggered after the resource reselection is completed (so that the reselected resource is included in the wake-up time). For example, the reselection triggering of resources (included within the related wake-up time) may be configured/limited to be allowed to occur after completion of the SL DRX reconfiguration operation (and/or the (recommended/updated) SL DRX configuration information reception (and/or request and/or update/transmission) operation). For example, the SL DRX reconfiguration operation (and/or the (recommended/updated) SL DRX configuration information reception (and/or request and/or update/transmission) operation) may be configured/limited to be performed/allowed after the resource reselection is triggered (and before the resource reselection is completed). In this case, for example, resources may be reselected to resources included within the wake-up time related to SL DRX for which the reconfiguration has been completed (and/or received (and/or requested and/or updated/transmitted) (recommended/updated) SL DRX configuration information).

For example, if the condition to trigger the SL DRX reconfiguration described above is not satisfied, in step S1020, the peer UE and/or the UE may keep the currently configured DRX configuration even if the resource reselection is performed. For example, if the following condition is satisfied, in step S1020, the peer UE and/or the UE may keep the currently configured DRX configuration even if the resource reselection is performed.
- If (periodic) traffic pattern information (e.g., traffic generation pattern/period, slot/timing offset, traffic size, traffic generation) and/or existing (configured/currently used) SL DRX configuration information or SL DRX configuration information recommended by the UE to the peer UE is not changed, and/or
- If (consecutive) DTX (e.g., a problem in which the RX UE fails to decode a PSCCH and does not transmit a PSFCH) (and/or NACK) occurs by less than a pre-configured threshold number when performing communication based on an existing (configured/currently used) SL DRX configuration and/or wake-up time, and/or
- If generated data is dropped by less than a pre-configured threshold number (e.g., if transmission is impossible within an existing wake-up time when considering the data-related (remaining) PDB) when performing communication based on an existing (configured/currently used) SL DRX configuration and/or wake-up time, and/or
- If, among transmission resources related to generated data, transmission resources less than a pre-configured threshold number/ratio are located within an inactive time of an existing SL DRX configuration when performing communication based on an existing (configured/currently used) SL DRX configuration and/or wake-up time, and/or
- If interference level (e.g., CBR) measured within an active time related to an existing (configured/currently used) SL DRX configuration is less than a pre-configured threshold, and/or
- If an overlap time/ratio between a wake-up time related to an existing SL DRX configuration and a wake-up time related to a recommended SL DRX configuration (received from the UE) is greater than or equal to a pre-configured threshold time/ratio, and/or
- If a difference between a previous traffic pattern parameter (e.g., data generation period/offset) transmitted by the peer UE to the UE and the latest traffic pattern parameter transmitted (or to be transmitted) by the peer UE to the UE is less than or equal to a pre-configured threshold (e.g., when performing a reconfiguration for a SL DRX configuration of the UE for receiving a packet transmitted by the peer UE)

In step S1030, the peer UE and/or the UE may perform transmission and reception of SL data (e.g., SL communication) based on the DRX configuration. For example, if it is determined to keep the SL DRX configuration, the RRC reconfiguration procedure to reconfigure the SL unicast DRX configuration may not be performed. For example, the SL communication may include at least one of PSCCH transmission and reception, PSSCH transmission and reception, PSFCH transmission and reception, S-SSB transmission and reception, and/or RRC message (e.g., SL DRX configuration) transmission and reception.

The proposal of the present disclosure can be applied/extended to/as a method of solving a problem in which loss occurs due to interruption which occurs during Uu BWP switching. In addition, in the case of a plurality of SL BWPs being supported for the UE, the proposal of the present disclosure can be applied/extended to/as a method of solving a problem in which loss occurs due to interruption which occurs during SL BWP switching.

The proposal of the present disclosure can be applied/extended to/as UE-pair specific SL DRX configuration(s), UE-pair specific SL DRX pattern(s) or parameter(s) (e.g., timer) included in UE-pair specific SL DRX configuration(s), as well as default/common SL DRX configuration(s), default/common SL DRX pattern(s), or parameter(s) (e.g., timer) included in default/common SL DRX configuration(s). In addition, the on-duration mentioned in the proposal of the present disclosure may be extended to or interpreted as an active time (e.g., time to wake-up state (e.g., RF module turned on) to receive/transmit radio signal(s)) duration, and the off-duration may be extended to or interpreted as a sleep time (e.g., time to sleep in sleep mode state (e.g., RF module turned off) to save power) duration. It does not mean that the TX UE is obligated to operate in the sleep mode in the sleep time duration. If necessary, the TX UE may be allowed to operate in an active time for a while for a sensing operation and/or a transmission operation, even if it is a sleep time.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2).

For example, whether or not the proposed rule of the present disclosure is applied and/or related parameter configuration value(s) may be configured (differently or independently) for each resource pool. For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or pre-emption-based resource reselection. For example, whether or not the proposed rule of the present disclosure is applied and/or related parameter configuration value(s) may be configured specifically (or differently or independently) for re-evaluation or re-evaluation-based resource reselection. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) for the case of performing SL DRX. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation.

The certain time mentioned in the proposal of the present disclosure may refer to a time during which a UE operates in an active time for a pre-defined time in order to receive sidelink signal(s) or sidelink data from a counterpart UE. The certain time mentioned in the proposal of the present disclosure may refer to a time during which a UE operates in an active time as long as a specific timer (e.g., sidelink DRX retransmission timer, sidelink DRX inactivity timer, or timer to ensure that an RX UE can operate in an active time in a DRX operation of the RX UE) is running in order to receive sidelink signal(s) or sidelink data from a counterpart UE. In addition, the proposal and whether or not the proposal rule of the present disclosure is applied (and/or related parameter configuration value(s)) may also be applied to a mmWave SL operation.

Based on various embodiments of the present disclosure, the peer UE may reconfigure the SL DRX configuration for the UE if the certain condition is satisfied. Through this, it is possible to prevent the problem of the peer UE frequently triggering/performing the reconfiguration of the SL DRX configuration for the UE. Accordingly, signaling overhead between the peer UE and the UE and/or between the peer UE and the base station may be reduced, which may lead to efficient use of radio resources. Furthermore, interference problems caused by frequent reconfiguration of the SL DRX configuration can be minimized. Additionally, the peer UE can reconfigure the SL DRX configuration for the UE if the certain condition is satisfied, thereby ensuring that the minimum SL resources are located within the UE's active time. Through this, the power saving gain of the UE can be maximized and the reliability of SL communication between the peer UE and the UE can be guaranteed.

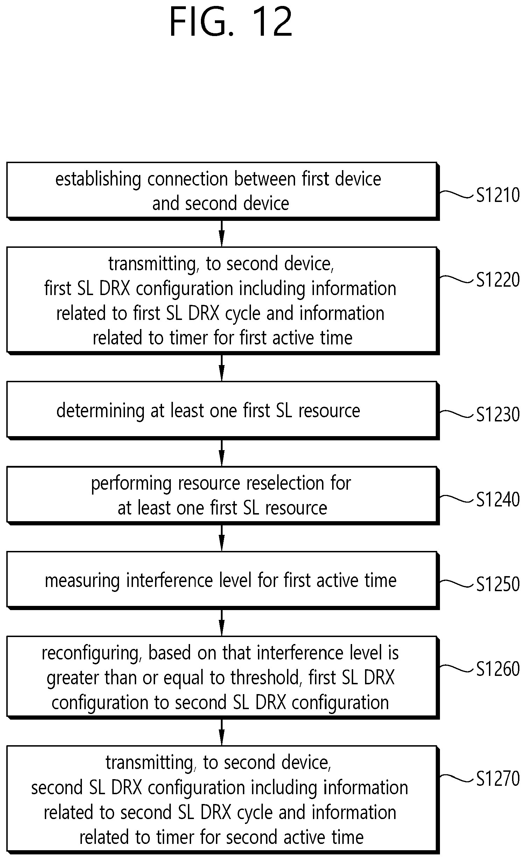

FIG. 12 shows a method for a first device to perform wireless communication, based on an embodiment of the present disclosure. The embodiment of FIG. 12 may be combined with various embodiments of the present disclosure.

Referring to FIG. 12, in step S1210, the first device may establish a connection between the first device and a second device. In step S1220, the first device may transmit, to the second device, a first sidelink (SL) discontinuous reception (DRX) configuration including information related to a first SL DRX cycle and information related to a timer for a first active time. In step S 1230, the first device may determine at least one first SL resource. In step S1240, the first device may perform resource reselection for the at least one first SL resource. In step S 1250, the first device may measure an interference level for the first active time. In step S1260, the first device may reconfigure, based on that the interference level is greater than or equal to a threshold, the first SL DRX configuration to a second SL DRX configuration. In step S1270, the first device may transmit, to the second device, the second SL DRX configuration including information related to a second SL DRX cycle and information related to a timer for a second active time.

For example, the interference level may be a value obtained by dividing a number of subchannels whose SL received signal strength indicator (RSSI) measured by the first device exceeds a threshold, among total subchannels included in a resource pool within the first active time, by a number of the total subchannels.

For example, based on a change of a pattern related to traffic of the first device, the first SL DRX configuration may be reconfigured to the second SL DRX configuration. For example, the pattern related to the traffic may include at least one of a generation pattern of the traffic, a generation period of the traffic, a time offset of a slot on which the traffic is transmitted, or a size of the traffic.

For example, based on that a number of discontinuous transmissions (DTXs) detected between the first device and the second device is greater than or equal to a threshold, the first SL DRX configuration may be reconfigured to the second SL DRX configuration.

For example, based on that a number of times the first device drops data transmission to the second device is greater than or equal to a threshold, the first SL DRX configuration may be reconfigured to the second SL DRX configuration.

For example, the at least one first SL resource may be reselected as at least one second SL resource based on the resource reselection, and based on that a number of resources or a ratio of resources, among the at least one second SL resource, located outside the first active time is greater than or equal to a threshold number or a threshold ratio, the first SL DRX configuration may be reconfigured to the second SL DRX configuration.

For example, based on that a difference between a parameter related to a pattern of traffic previously transmitted by the first device and a parameter related to a pattern of traffic to be transmitted by the first device is greater than a threshold, the first SL DRX configuration may be reconfigured to the second SL DRX configuration.

For example, the at least one first SL resource may be selected by the first device or allocated by a base station.

Additionally, for example, the first device may transmit, to a base station, information for requesting a reconfiguration of the first SL DRX configuration. Additionally, for example, the first device may receive, from the base station, the second SL DRX configuration. For example, the first device may have a radio resource control (RRC) connection with the base station.

For example, based on the first device not having a radio resource control (RRC) connection with a base station, the second SL DRX configuration may be determined by the first device.

For example, based on that a number of resources or a ratio of resources, among the at least one first SL resource, located outside the first active time is greater than or equal to a threshold number or a threshold ratio, the resource reselection for the at least one first SL resource may be performed by the first device.

For example, based on that the interference level is less than the threshold, the first SL DRX configuration may be kept.

The proposed method may be applied to the device(s) based on various embodiments of the present disclosure. First, the processor 102 of the first device 100 may establish a connection between the first device and a second device. In addition, the first device may control the transceiver 106 to transmit, to the second device, a first sidelink (SL) discontinuous reception (DRX) configuration including information related to a first SL DRX cycle and information related to a timer for a first active time. In addition, the first device may determine at least one first SL resource. In addition, the first device may perform resource reselection for the at least one first SL resource. In addition, the first device may measure an interference level for the first active time. In addition, the first device may reconfigure, based on that the interference level is greater than or equal to a threshold, the first SL DRX configuration to a second SL DRX configuration. In addition, the first device may control the transceiver 106 to transmit, to the second device, the second SL DRX configuration including information related to a second SL DRX cycle and information related to a timer for a second active time.

Based on an embodiment of the present disclosure, a first device adapted to perform wireless communication may be provided. For example, the first device may comprise: one or more memories storing instructions; one or more transceivers; and one or more processors connected to the one or more memories and the one or more transceivers. For example, the one or more processors may execute the instructions to: establish a connection between the first device and a second device; transmit, to the second device, a first sidelink (SL) discontinuous reception (DRX) configuration including information related to a first SL DRX cycle and information related to a timer for a first active time; determine at least one first SL resource; perform resource reselection for the at least one first SL resource; measure an interference level for the first active time; reconfigure, based on that the interference level is greater than or equal to a threshold, the first SL DRX configuration to a second SL DRX configuration; and transmit, to the second device, the second SL DRX configuration including information related to a second SL DRX cycle and information related to a timer for a second active time.

Based on an embodiment of the present disclosure, an apparatus adapted to control a first user equipment (UE) may be provided. For example, the apparatus may comprise: one or more processors; and one or more memories operably connected to the one or more processors and storing instructions. For example, the one or more processors may execute the instructions to: establish a connection between the first UE and a second UE; transmit, to the second UE, a first sidelink (SL) discontinuous reception (DRX) configuration including information related to a first SL DRX cycle and information related to a timer for a first active time; determine at least one first SL resource; perform resource reselection for the at least one first SL resource; measure an interference level for the first active time; reconfigure, based on that the interference level is greater than or equal to a threshold, the first SL DRX configuration to a second SL DRX configuration; and transmit, to the second UE, the second SL DRX configuration including information related to a second SL DRX cycle and information related to a timer for a second active time.

Based on an embodiment of the present disclosure, a non-transitory computer-readable storage medium storing instructions may be provided. For example, the non-transitory computer-readable storage medium storing instructions, when executed, may cause a first device to: establish a connection between the first device and a second device; transmit, to the second device, a first sidelink (SL) discontinuous reception (DRX) configuration including information related to a first SL DRX cycle and information related to a timer for a first active time; determine at least one first SL resource; perform resource reselection for the at least one first SL resource; measure an interference level for the first active time; reconfigure, based on that the interference level is greater than or equal to a threshold, the first SL DRX configuration to a second SL DRX configuration; and transmit, to the second device, the second SL DRX configuration including information related to a second SL DRX cycle and information related to a timer for a second active time.

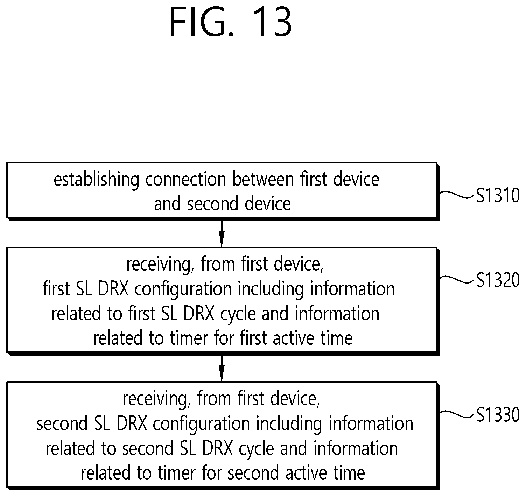

FIG. 13 shows a method for a second device to perform wireless communication, based on an embodiment of the present disclosure. The embodiment of FIG. 13 may be combined with various embodiments of the present disclosure.

Referring to FIG. 13, in step S1310, the second device may establish a connection between a first device and the second device. In step S1320, the second device may receive, from the first device, a first sidelink (SL) discontinuous reception (DRX) configuration including information related to a first SL DRX cycle and information related to a timer for a first active time. In step S1330, the second device may receive, from the first device, a second SL DRX configuration including information related to a second SL DRX cycle and information related to a timer for a second active time. For example, based on that an interference level measured by the first device within the first active time is greater than or equal to a threshold, the first SL DRX configuration may be reconfigured to the second SL DRX configuration.

The proposed method may be applied to the device(s) based on various embodiments of the present disclosure. First, the processor 202 of the second device 200 may establish a connection between a first device and the second device. In addition, the processor 202 of the second device 200 may control the transceiver 206 to receive, from the first device, a first sidelink (SL) discontinuous reception (DRX) configuration including information related to a first SL DRX cycle and information related to a timer for a first active time. In addition, the processor 202 of the second device 200 may control the transceiver 206 to receive, from the first device, a second SL DRX configuration including information related to a second SL DRX cycle and information related to a timer for a second active time. For example, based on that an interference level measured by the first device within the first active time is greater than or equal to a threshold, the first SL DRX configuration may be reconfigured to the second SL DRX configuration.

Based on an embodiment of the present disclosure, a second device adapted to perform wireless communication may be provided. For example, the second device may comprise: one or more memories storing instructions; one or more transceivers; and one or more processors connected to the one or more memories and the one or more transceivers. For example, the one or more processors may execute the instructions to: establish a connection between a first device and the second device; receive, from the first device, a first sidelink (SL) discontinuous reception (DRX) configuration including information related to a first SL DRX cycle and information related to a timer for a first active time; and receive, from the first device, a second SL DRX configuration including information related to a second SL DRX cycle and information related to a timer for a second active time. For example, based on that an interference level measured by the first device within the first active time is greater than or equal to a threshold, the first SL DRX configuration may be reconfigured to the second SL DRX configuration.

Based on an embodiment of the present disclosure, an apparatus adapted to control a second user equipment (UE) may be provided. For example, the apparatus may comprise: one or more processors; and one or more memories operably connected to the one or more processors and storing instructions. For example, the one or more processors may execute the instructions to: establish a connection between a first UE and the second UE; receive, from the first UE, a first sidelink (SL) discontinuous reception (DRX) configuration including information related to a first SL DRX cycle and information related to a timer for a first active time; and receive, from the first UE, a second SL DRX configuration including information related to a second SL DRX cycle and information related to a timer for a second active time. For example, based on that an interference level measured by the first UE within the first active time is greater than or equal to a threshold, the first SL DRX configuration may be reconfigured to the second SL DRX configuration.

Based on an embodiment of the present disclosure, a non-transitory computer-readable storage medium storing instructions may be provided. For example, the non-transitory computer-readable storage medium storing instructions, when executed, may cause a second device to: establish a connection between a first device and the second device; receive, from the first device, a first sidelink (SL) discontinuous reception (DRX) configuration including information related to a first SL DRX cycle and information related to a timer for a first active time; and receive, from the first device, a second SL DRX configuration including information related to a second SL DRX cycle and information related to a timer for a second active time. For example, based on that an interference level measured by the first device within the first active time is greater than or equal to a threshold, the first SL DRX configuration may be reconfigured to the second SL DRX configuration.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

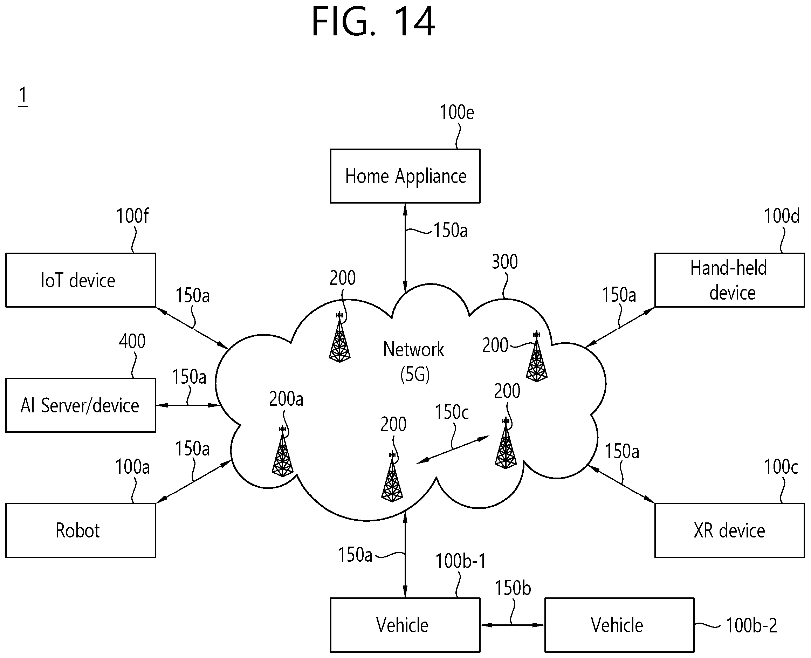

FIG. 14 shows a communication system 1, based on an embodiment of the present disclosure. The embodiment of FIG. 14 may be combined with various embodiments of the present disclosure.

Referring to FIG. 14, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

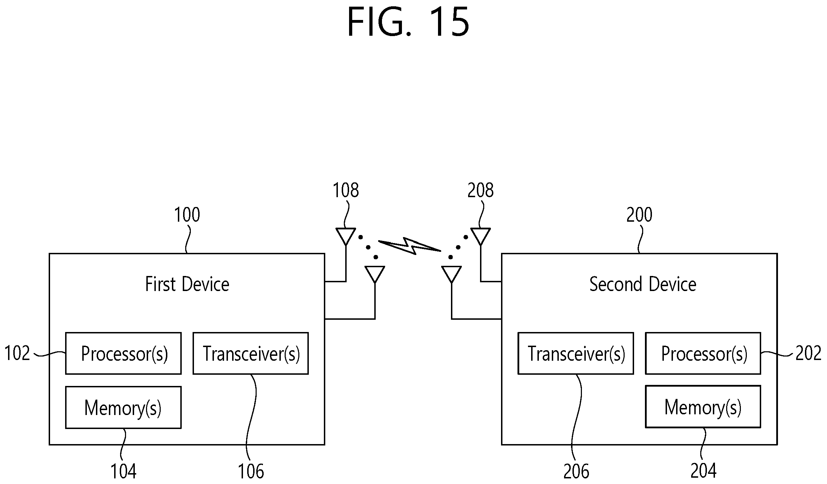

FIG. 15 shows wireless devices, based on an embodiment of the present disclosure. The embodiment of FIG. 15 may be combined with various embodiments of the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

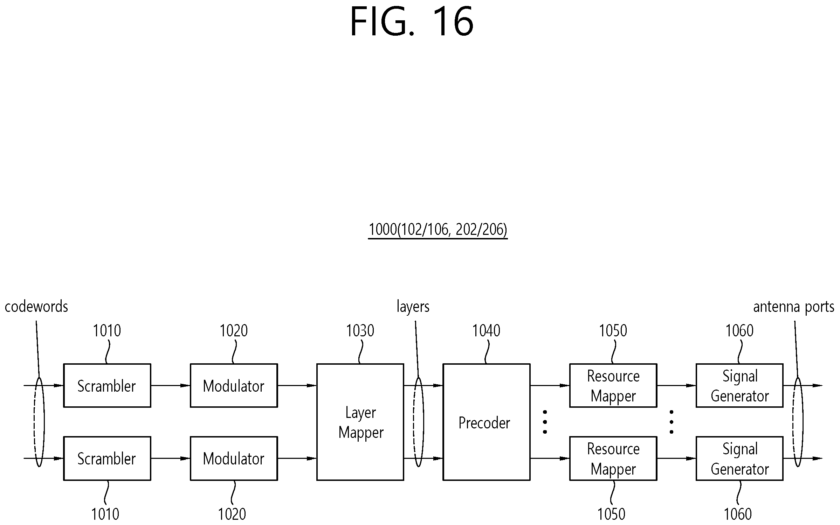

FIG. 16 shows a signal process circuit for a transmission signal, based on an embodiment of the present disclosure. The embodiment of FIG. 16 may be combined with various embodiments of the present disclosure.

Referring to FIG. 16, a signal processing circuit 1000 may include scramblers 1010, modulators 1020, a layer mapper 1030, a precoder 1040, resource mappers 1050, and signal generators 1060. An operation/function of FIG. 16 may be performed, without being limited to, the processors 102 and 202 and/or the transceivers 106 and 206 of FIG. 15. Hardware elements of FIG. 16 may be implemented by the processors 102 and 202 and/or the transceivers 106 and 206 of FIG. 15. For example, blocks 1010 to 1060 may be implemented by the processors 102 and 202 of FIG. 15. Alternatively, the blocks 1010 to 1050 may be implemented by the processors 102 and 202 of FIG. 15 and the block 1060 may be implemented by the transceivers 106 and 206 of FIG. 15.

Codewords may be converted into radio signals via the signal processing circuit 1000 of FIG. 16. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 16. For example, the wireless devices (e.g., 100 and 200 of FIG. 15) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

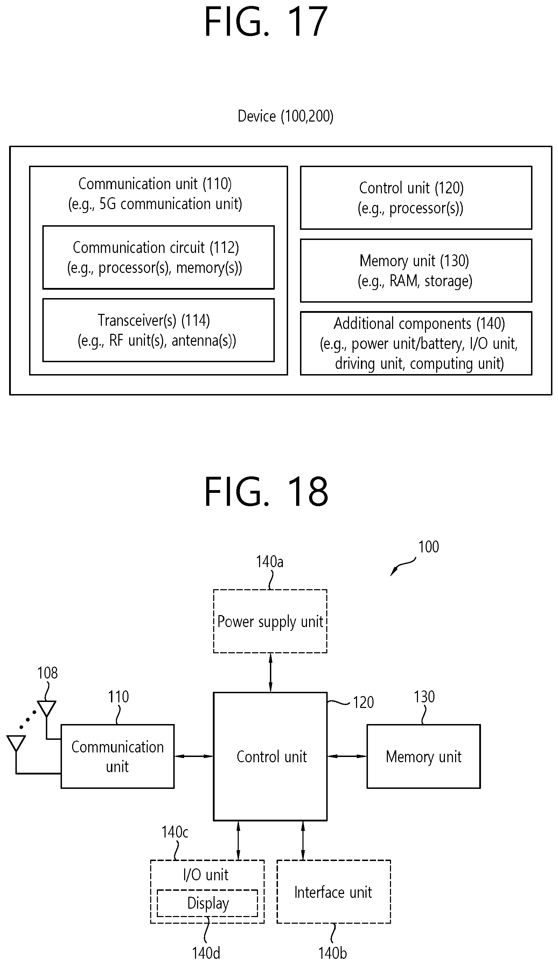

FIG. 17 shows another example of a wireless device, based on an embodiment of the present disclosure. The wireless device may be implemented in various forms according to a use-case/service (refer to FIG. 14). The embodiment of FIG. 17 may be combined with various embodiments of the present disclosure.

Referring to FIG. 17, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 17 will be described in detail with reference to the drawings.

FIG. 18 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 18 may be combined with various embodiments of the present disclosure.

Referring to FIG. 18, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 17, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

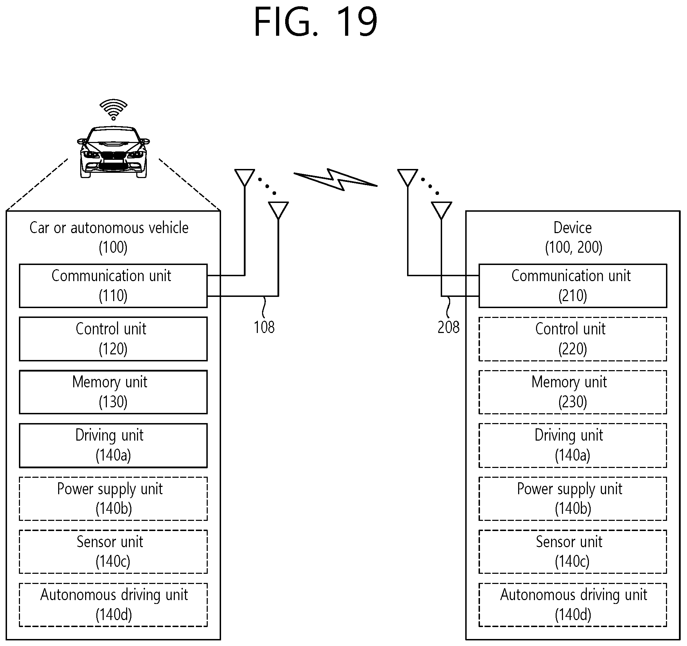

FIG. 19 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 19 may be combined with various embodiments of the present disclosure.

Referring to FIG. 19, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

## Claims

1. A method for performing wireless communication by a first device (100), the method comprising:
establishing (S1210) a connection between the first device (100) and a second device (200);
transmitting (S1010, S1220), to the second device (200), a first sidelink, SL, discontinuous reception, DRX, configuration including information related to a first SL DRX cycle and information related to a timer for a first active time;
determining (S1230) at least one first SL resource;
performing (S1240) resource reselection for the at least one first SL resource;
reconfiguring, based on that a number of resources located outside the first active time among at least one second SL resource determined based on the resource reselection is greater than or equal to a threshold number or a threshold ratio, the first SL DRX configuration to a second SL DRX configuration; and
transmitting (S1270), to the second device (200), the second SL DRX configuration including information related to a second SL DRX cycle and information related to a timer for a second active time.

2. The method of claim 1, wherein, based on a change of a pattern related to traffic of the first device (100), the first SL DRX configuration is reconfigured to the second SL DRX configuration.

3. The method of claim 2, wherein the pattern related to the traffic includes at least one of a generation pattern of the traffic, a generation period of the traffic, a time offset of a slot on which the traffic is transmitted, or a size of the traffic.

4. The method of claim 1, wherein, based on that a number of discontinuous transmissions, DTXs, detected between the first device (100) and the second device (200) is greater than or equal to a threshold, the first SL DRX configuration is reconfigured to the second SL DRX configuration.

5. The method of claim 1, wherein, based on that a number of times the first device (100) drops data transmission to the second device (200) is greater than or equal to a threshold, the first SL DRX configuration is reconfigured to the second SL DRX configuration.

6. The method of claim 1, wherein, based on that a difference between a parameter related to a pattern of traffic previously transmitted by the first device (100) and a parameter related to a pattern of traffic to be transmitted by the first device (100) is greater than a threshold, the first SL DRX configuration is reconfigured to the second SL DRX configuration.

7. The method of claim 1, wherein the at least one first SL resource is selected by the first device (100) or allocated by a base station.

8. The method of claim 1, further comprising:
transmitting, to a base station, information for requesting a reconfiguration of the first SL DRX configuration; and
receiving, from the base station, the second SL DRX configuration,
wherein the first device (100) has a radio resource control, RRC, connection with the base station.

9. The method of claim 1, wherein, based on the first device (100) not having a radio resource control, RRC, connection with a base station, the second SL DRX configuration is determined by the first device (100).

10. The method of claim 1, wherein, based on that a number of resources or a ratio of resources, among the at least one first SL resource, located outside the first active time is greater than or equal to a threshold number or a threshold ratio, the resource reselection for the at least one first SL resource is performed by the first device (100).

11. A first device (100) adapted to perform wireless communication, the first device (100) comprising:
at least one transceiver (106);
at least one processor (102); and
at least one memory (104) connected to the at least one processor (102) and storing instructions that, based on being executed, cause the first device (100) to perform operations comprising:
establishing (S1210) a connection between the first device (100) and a second device (200);
transmitting (S1010, S1220), to the second device (200), a first sidelink, SL, discontinuous reception, DRX, configuration including information related to a first SL DRX cycle and information related to a timer for a first active time;
determining (S1230) at least one first SL resource;
performing (S1240) resource reselection for the at least one first SL resource;
reconfiguring, based on that a number of resources located outside the first active time among at least one second SL resource determined based on the resource reselection is greater than or equal to a threshold number or a threshold ratio, the first SL DRX configuration to a second SL DRX configuration; and
transmitting (S1270), to the second device (200), the second SL DRX configuration including information related to a second SL DRX cycle and information related to a timer for a second active time.

12. The first device (100) of claim 11, wherein the operations further comprise operations of a method according to any of claims 2 to 10.

## Patentansprüche

1. Verfahren zur Durchführung von Drahtloskommunikation durch eine erste Vorrichtung (100), wobei das Verfahren Folgendes umfasst:
Herstellen (S1210) einer Verbindung zwischen der ersten Vorrichtung (100) und einer zweiten Vorrichtung (200);
Übertragen (S1010, S1220) einer ersten Konfiguration für diskontinuierlichen Empfang, DRX, eines Seitenlinks, SL, die Informationen in Bezug auf einen ersten SL-DRX-Zyklus und Informationen in Bezug auf einen Zeitgeber für eine erste aktive Zeit beinhaltet, an die zweite Vorrichtung (200);
Bestimmen (S1230) mindestens einer ersten SL-Ressource;
Durchführen (S1240) einer Ressourcenneuauswahl für die mindestens eine erste SL-Ressource;
Rekonfigurieren der ersten SL-DRX-Konfiguration in eine zweite SL-DRX-Konfiguration basierend darauf, dass eine Anzahl von Ressourcen, die sich außerhalb der ersten aktiven Zeit befinden, unter mindestens einer zweiten SL-Ressource, die basierend auf der Ressourcenneuauswahl bestimmt wird, größer oder gleich einer Schwellenanzahl oder einem Schwellenverhältnis ist; und
Übertragen (S1270) der zweiten SL-DRX-Konfiguration, die Informationen in Bezug auf einen zweiten SL-DRX-Zyklus und Informationen in Bezug auf einen Zeitgeber für eine zweite aktive Zeit beinhaltet, an die zweite Vorrichtung (200).

2. Verfahren nach Anspruch 1, wobei basierend auf einer Änderung eines Musters in Bezug auf Verkehr der ersten Vorrichtung (100) die erste SL-DRX-Konfiguration in die zweite SL-DRX-Konfiguration rekonfiguriert wird.

3. Verfahren nach Anspruch 2, wobei das Muster in Bezug auf den Verkehr mindestens eines von einem Erzeugungsmuster des Verkehrs, einer Erzeugungsperiode des Verkehrs, einem Zeitversatz eines Schlitzes, auf dem der Verkehr übertragen wird, oder einer Größe des Verkehrs beinhaltet.

4. Verfahren nach Anspruch 1, wobei basierend darauf, dass eine Anzahl diskontinuierlicher Übertragungen, DTXs, die zwischen der ersten Vorrichtung (100) und der zweiten Vorrichtung (200) detektiert wird, größer oder gleich einem Schwellenwert ist, die erste SL-DRX-Konfiguration in die zweite SL-DRX-Konfiguration rekonfiguriert wird.

5. Verfahren nach Anspruch 1, wobei basierend darauf, dass eine Anzahl von Malen, die die erste Vorrichtung (100) Datenübertragung an die zweite Vorrichtung (200) abbricht, größer oder gleich einem Schwellenwert ist, die erste SL-DRX-Konfiguration in die zweite SL-DRX-Konfiguration rekonfiguriert wird.

6. Verfahren nach Anspruch 1, wobei basierend darauf, dass eine Differenz zwischen einem Parameter in Bezug auf ein von der ersten Vorrichtung (100) zuvor übertragenes Verkehrsmuster und einem Parameter in Bezug auf ein von der ersten Vorrichtung (100) zu übertragendes Verkehrsmuster größer als ein Schwellenwert ist, die erste SL-DRX-Konfiguration in die zweite SL-DRX-Konfiguration rekonfiguriert wird.

7. Verfahren nach Anspruch 1, wobei die mindestens eine erste SL-Ressource von der ersten Vorrichtung (100) ausgewählt oder von einer Basisstation zugewiesen wird.

8. Verfahren nach Anspruch 1, ferner umfassend:
Übertragen von Informationen zum Anfordern einer Rekonfiguration der ersten SL-DRX-Konfiguration an eine Basisstation; und
Empfangen der zweiten SL-DRX-Konfiguration von der Basisstation,
wobei die erste Vorrichtung (100) eine Funkressourcensteuerungsverbindung, RRC-Verbindung, mit der Basisstation aufweist.

9. Verfahren nach Anspruch 1, wobei basierend darauf, dass die erste Vorrichtung (100) keine Funkressourcensteuerungsverbindung, RRC-Verbindung, mit einer Basisstation aufweist, die zweite SL-DRX-Konfiguration von der ersten Vorrichtung (100) bestimmt wird.

10. Verfahren nach Anspruch 1, wobei basierend darauf, dass eine Anzahl von Ressourcen oder ein Verhältnis von Ressourcen unter der mindestens einen ersten SL-Ressource, die sich außerhalb der ersten aktiven Zeit befindet, größer oder gleich einem Schwellenanzahl oder einem Schwellenverhältnis ist, die Ressourcenneuauswahl für die mindestens eine erste SL-Ressource von der ersten Vorrichtung (100) durchgeführt wird.

11. Erste Vorrichtung (100), die zum Durchführen von Drahtloskommunikation ausgelegt ist, wobei die erste Vorrichtung (100) Folgendes umfasst:
mindestens einen Sendeempfänger (106);
mindestens einen Prozessor (102); und
mindestens einen Speicher (104), der mit dem mindestens einen Prozessor (102) verbunden ist und Anweisungen speichert, die basierend darauf, dass sie ausgeführt werden, die erste Vorrichtung (100) zum Durchführen von Operationen veranlassen, die Folgendes umfassen:
Herstellen (S1210) einer Verbindung zwischen der ersten Vorrichtung (100) und einer zweiten Vorrichtung (200);
Übertragen (S1010, S1220) einer ersten Konfiguration für diskontinuierlichen Empfang, DRX, eines Seitenlinks, SL, die Informationen in Bezug auf einen ersten SL-DRX-Zyklus und Informationen in Bezug auf einen Zeitgeber für eine erste aktive Zeit beinhaltet, an die zweite Vorrichtung (200);
Bestimmen (S1230) mindestens einer ersten SL-Ressource;
Durchführen (S1240) einer Ressourcenneuauswahl für die mindestens eine erste SL-Ressource;
Rekonfigurieren der ersten SL-DRX-Konfiguration in eine zweite SL-DRX-Konfiguration basierend darauf, dass eine Anzahl von Ressourcen, die sich außerhalb der ersten aktiven Zeit befinden, unter mindestens einer zweiten SL-Ressource, die basierend auf der Ressourcenneuauswahl bestimmt wird, größer oder gleich einer Schwellenanzahl oder einem Schwellenverhältnis ist; und
Übertragen (S1270) der zweiten SL-DRX-Konfiguration, die Informationen in Bezug auf einen zweiten SL-DRX-Zyklus und Informationen in Bezug auf einen Zeitgeber für eine zweite aktive Zeit beinhaltet, an die zweite Vorrichtung (200).

12. Erste Vorrichtung (100) nach Anspruch 11, wobei die Operationen ferner Operationen eines Verfahrens nach einem der Ansprüche 2 bis 10 umfassen.

## Revendications

1. Procédé pour réaliser une communication sans fil par un premier dispositif (100), le procédé comprenant :
l'établissement (S1210) d'une connexion entre le premier dispositif (100) et un second dispositif (200) ;
la transmission (S1010, S1220), au second dispositif (200), d'une première configuration de réception discontinue, « Discontinuous Reception », DRX, de liaison latérale, « SideLink » SL, incluant des informations connexes à un premier cycle de DRX de SL et des informations connexes à une minuterie pour un premier temps actif ;
la détermination (S1230) d'au moins une première ressource de SL ;
la réalisation (S1240) d'une resélection de ressource pour l'au moins une première ressource de SL ;
la reconfiguration, sur la base du fait qu'un nombre de ressources situées en dehors du premier temps actif parmi au moins une seconde ressource de SL déterminée sur la base de la resélection de ressource est supérieur ou égal à un nombre seuil ou à un rapport seuil, de la première configuration de DRX de SL en une seconde configuration de DRX de SL ; et
la transmission (S1270), au second dispositif (200), de la seconde configuration de DRX de SL incluant des informations connexes à un second cycle de DRX de SL et des informations connexes à une minuterie pour un second temps actif.

2. Procédé de la revendication 1, dans lequel, sur la base d'un changement d'un modèle connexe à un trafic du premier dispositif (100), la première configuration de DRX de SL est reconfigurée en la seconde configuration de DRX de SL.

3. Procédé de la revendication 2, dans lequel le modèle connexe au trafic inclut au moins un élément parmi un modèle de génération du trafic, une période de génération du trafic, un décalage temporel d'un intervalle de temps sur lequel le trafic est transmis, ou une taille du trafic.

4. Procédé de la revendication 1, dans lequel, sur la base du fait qu'un nombre de transmissions discontinues, DTXs, détectées entre le premier dispositif (100) et le second dispositif (200) est supérieur ou égal à un seuil, la première configuration de DRX de SL est reconfigurée en la seconde configuration de DRX de SL.

5. Procédé de la revendication 1, dans lequel, sur la base du fait qu'un nombre de fois que le premier dispositif (100) abandonne une transmission de données au second dispositif (200) est supérieur ou égal à un seuil, la première configuration de DRX de SL est reconfigurée en la seconde configuration de DRX de SL.

6. Procédé de la revendication 1, dans lequel, sur la base du fait qu'une différence entre un paramètre connexe à un modèle de trafic transmis auparavant par le premier dispositif (100) et un paramètre connexe à un modèle de trafic destiné à être transmis par le premier dispositif (100) est supérieure à un seuil, la première configuration de DRX de SL est reconfigurée en la seconde configuration de DRX de SL.

7. Procédé de la revendication 1, dans lequel l'au moins une première ressource de SL est sélectionnée par le premier dispositif (100) ou attribuée par une station de base.

8. Procédé de la revendication 1, comprenant en outre :
la transmission, à une station de base, d'informations pour demander une reconfiguration de la première configuration de DRX de SL ; et
la réception, en provenance de la station de base, de la seconde configuration de DRX de SL,
dans lequel le premier dispositif (100) a une connexion de commande de ressource radio, « Radio Resource Control » RRC, à la station de base.

9. Procédé de la revendication 1, dans lequel, sur la base du fait que le premier dispositif (100) n'a pas de connexion de commande de ressource radio, RRC, à une station de base, la seconde configuration de DRX de SL est déterminée par le premier dispositif (100).

10. Procédé de la revendication 1, dans lequel, sur la base du fait qu'un nombre de ressources ou un rapport de ressources, parmi l'au moins une première ressource de SL, situées en dehors du premier temps actif, est supérieur ou égal à un nombre seuil ou à un rapport seuil, la resélection de ressource pour l'au moins une première ressource de SL est réalisée par le premier dispositif (100).

11. Premier dispositif (100) adapté pour réaliser une communication sans fil, le premier dispositif (100) comprenant :
au moins un émetteur-récepteur (106) ;
au moins un processeur (102) ; et
au moins une mémoire (104) connectée à l'au moins un processeur (102) et stockant des instructions qui, sur la base du fait qu'elles sont exécutées, amènent le premier dispositif (100) à réaliser des opérations comprenant :
l'établissement (S1210) d'une connexion entre le premier dispositif (100) et un second dispositif (200) ;
la transmission (S1010, S1220), au second dispositif (200), d'une première configuration de réception discontinue, « Discontinuous Reception », DRX, de liaison latérale, « SideLink » SL, incluant des informations connexes à un premier cycle de DRX de SL et des informations connexes à une minuterie pour un premier temps actif ;
la détermination (S1230) d'au moins une première ressource de SL ;
la réalisation (S1240) d'une resélection de ressource pour l'au moins une première ressource de SL ;
la reconfiguration, sur la base du fait qu'un nombre de ressources situées en dehors du premier temps actif parmi au moins une seconde ressource de SL déterminée sur la base de la resélection de ressource est supérieur ou égal à un nombre seuil ou à un rapport seuil, de la première configuration de DRX de SL en une seconde configuration de DRX de SL ; et
la transmission (S1270), au second dispositif (200), de la seconde configuration de DRX de SL incluant des informations connexes à un second cycle de DRX de SL et des informations connexes à une minuterie pour un second temps actif.

12. Premier dispositif (100) de la revendication 11, dans lequel les opérations comprennent en outre des opérations d'un procédé selon de quelconques des revendications 2 à 10.
